(19) **Europäisches Patentamt**

**European Patent Office**

**Office européen des brevets**

(11) **EP 0 848 150 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **F01D 25/00**, F02C 6/12

(21) Anmeldenummer: **97810868.6**

(22) Anmeldetag: **13.11.1997**

(54) **Reinigungsvorrichtung für die Turbine eines Turboladers**

Cleaning device for the turbine of a turbocharger

Dispositif de nettoyage pour la turbine d'une turbo-soufflante

(84) Benannte Vertragsstaaten:
**DE FR GB**

(30) Priorität: **11.12.1996 DE 19651318**

(43) Veröffentlichungstag der Anmeldung:
**17.06.1998 Patentblatt 1998/25**

(73) Patentinhaber: **ABB Turbo Systems AG**
**5401 Baden (CH)**

(72) Erfinder:
• **Bochud, Dominique**
  **5417 Untersiggenthal (CH)**
• **Kohling, Markus**
  **5426 Lengnau (CH)**
• **Werro, Jean Yves**
  **8957 Spreitenbach (CH)**

(74) Vertreter: **ABB Patent Attorneys**
**c/o ABB Schweiz AG**
**Brown Boveri Strasse 6**
**5400 Baden (CH)**

(56) Entgegenhaltungen:
**FR-A- 2 585 408**          **US-A- 4 196 020**

## Beschreibung

### Stand der Technik

Die Verwendung von Abgasturboladern zur Leistungssteigerung von Brennkraftmaschinen ist heute weit verbreitet. Dabei wird die Abgasturbine des Turboladers von den Abgasen der Brennkraftmaschine beaufschlagt und deren kinetische Energie zum Ansaugen und Verdichten von Luft für die Brennkraftmaschine verwendet. In Abhängigkeit von der konkreten Betriebssituation und der Zusammensetzung der zum Antrieb der Brennkraftmaschine verwendeten Brennstoffe kommt es in der Abgasturbine früher oder später zu einer Verschmutzung der Laufschaufeln und des Düsenrings, wobei letzterer wesentlich stärker betroffen ist. Im Schwerölbetrieb bildet sich auf dem Düsenring eine Schmutzschicht aus, deren Härte vom Arbeitsprinzip der Brennkraftmaschine abhängig ist. Allgemein führen solche Schmutzablagerungen im Bereich des Düsenrings zu einem schlechteren Turbinenwirkungsgrad und demzufolge zur Verringerung der Leistung der Brennkraftmaschine. Ausserdem kommt es zu einer Erhöhung der Abgastemperaturen im Brennraum, wodurch sowohl die Brennkraftmaschine als auch der Turbolader thermisch überbeansprucht werden können. Bei der Brennkraftmaschine kann insbesondere eine Beschädigung oder gar Zerstörung der Ventile auftreten.

Lagert sich auf dem Düsenring und auf den Turbinenschaufeln eines mit einer Viertakt-Brennkraftmaschine verbundenen Turboladers eine Schmutzschicht ab, so ist mit einem Ansteigen der Drücke und der Drehzahl des Turboladers zu rechnen. Dadurch werden sowohl Bauteile der Brennkraftmaschine als auch des Turboladers thermisch und mechanisch höher beansprucht, was ebenfalls bis zur Zerstörung der betroffenen Bauteile führen kann. Bei unregelmässiger Verteilung der Schmutzschicht am Umfang der Laufschaufeln des Turbinenrades kommt es zu einer Erhöhung der Unwucht des Rotors, wodurch auch die Lagerung beschädigt werden kann.

Deshalb müssen die Düsenringe und die Laufschaufeln des Turbinenrades regelmässig von den ihnen anhaftenden Verschmutzungen befreit werden.

Aus der DE-A1 3515 825 sind ein Verfahren und eine Vorrichtung zur Reinigung der Laufschaufeln und des Düsenrings der Axialturbine eines Abgasturboladers mit Innenlagerung bekannt. Die Axialturbine besitzt ein Gaseintrittgehäuse mit einer äusseren und einer inneren Gehäusewand, wobei letztere zur Abdeckung des Turbinenrades und der Welle gegenüber dem Strömungskanal dient. Die Reinigungsvorrichtung besteht aus mehreren am Gaseintrittgehäuse der Axialturbine angeordneten Wasserinjektoren mit bis in den Strömungskanal reichenden Düsen und einer Wasserleitung. Bei einem bestimmten Verschmutzungsgrad der Axialturbine wird über eine Mess- und Auswerteeinheit ein Reinigungsbedarf ermittelt. Dementsprechend wird über die stromauf der Leitschaufeln angeordneten Düsen Wasser in den Strömungskanal eingespritzt. Die dabei entstehenden Wassertröpfchen werden vom Abgasstrom bis zu den Leit- bzw. den Laufschaufeln der Axialturbine transportiert und reinigen diese von den anhaftenden Verschmutzungen.

Eine ausreichende Reinigung der feststehenden Leitschaufeln ist aber nur dann zu erreichen, wenn diese auf ihrer dem Abgasstrom zugewandten Oberfläche möglichst vollständig mit den Wassertröpfchen beaufschlagt werden. Dazu müssen die Wasserinjektoren bzw. die Düsen gleichmässig verteilt auf dem gesamten Umfang der Axialturbine angeordnet werden. Demnach ist eine grössere Anzahl von Injektoren und Düsen erforderlich, wodurch eine solche Lösung relativ aufwendig und damit teuer wird. Ausserdem erhöht sich der Aufwand zur Abdichtung des Gaseintrittgehäuses mit zunehmender Anzahl von Düsen. Ein weiteres Problem ist die Anordnung der Düsen in einem Bereich des Strömungskanals, in dem eine relativ hohe Strömungsgeschwindigkeit vorherrscht. Dadurch entsteht ein flacher Wasserstrahl, welcher nur Teile der Leitschaufeln erreicht. Eine ausreichende Reinigung ist somit nicht gewährleistet.

### Darstellung der Erfindung

Die Erfindung versucht, alle diese Nachteile zu vermeiden. Jhr liegt die Aufgabe zugrunde, eine Reinigungsvorrichtung für den Düsenring und die Laufschaufeln der Axialturbine eines Turboladers zu schaffen und diese so anzuordnen, dass bei verringertem Bauaufwand eine verbesserte Reinigungswirkung erzielt wird.

Erfindungsgemäss wird dies dadurch erreicht, dass bei einer Vorrichtung gemäss dem Oberbegriff des Anspruchs 1, die Reinigungsvorrichtung aus nur einer Düse mit einer Mittelachse und zumindest einer Einspritzöffnung sowie aus einer Reinigungsmittelzuleitung besteht. Die zumindest eine Einspritzöffnung ist auf einem beliebigen Punkt einer gedachten Kreisfläche angeordnet, welche ihrerseits durch einen in einem Abstand a stromauf der inneren Gehäusewand befindlichen Mittelpunkt sowie durch einen Durchmesser $d_K$ definiert ist. Der Mittelpunkt der Kreisfläche liegt auf einer gedachten Parallelfläche zur inneren Gehäusewand. Diese Parallelfläche ist im Abstand a stromauf der inneren Gehäusewand ausgebildet, welcher sich nach folgender Formel berechnet:

$$a = \frac{d_a + d_i}{2} \cdot p_1 \qquad \text{mit } 5\% \leq p_1 \leq 30\%.$$

Dabei ist $d_a$ der Aussendurchmesser, $d_i$ der Innendurchmesser des Düsenrings und $p_1$ der den minimalen und den maximalen Abstand a der Parallelfläche zur inneren Gehäusewand bestimmende Prozentsatz.

Nur eine der in einem ohne Düse ausgebildeten Gaseintrittgehäuse darstellbaren Stromlinien des Abgasstromes schneidet die Parallelfläche rechtwinklig. Damit wird ein Schnittpunkt definiert, auf dem der Mittelpunkt der Kreisfläche angeordnet ist. Tangential zur Parallelfläche durch den Schnittpunkt verläuft eine Ebene. In dieser Tangentialebene ist die Kreisfläche ausgebildet. Der Durchmesser $d_K$ der Kreisfläche berechnet sich nach folgender Formel:

$$d_K = \frac{d_a + d_i}{2} \cdot p_2 \qquad \text{mit } 0\% \leq p_2 \leq 6\%,$$

wobei $p_2$ ein die Grösse des Durchmessers $d_K$ beeinflussender Prozentsatz ist. Die Mittelachse der Düse ist senkrecht zur Tangentialebene angeordnet und die zumindest eine Einspritzöffnung der Düse zumindest annähernd parallel zur Tangentialebene ausgerichtet.

Entsprechend dieser Definition sind die Düse und damit deren zumindest eine Einspritzöffnung in einem Bereich des Strömungskanals angeordnet, in dem sowohl der Verlauf der Stromlinien als auch das Strömungsgeschwindigkeitsprofil eine vollständige Ausbreitung und somit eine gleichmässige Verteilung des Reinigungsmittels auf dem Düsenring sowie den Laufschaufeln des Turbinenrades ermöglichen. Gegenüber dem Stand der Technik, bei dem das Reinigungsmittel zwar ebenfalls quer zur Gasströmung, jedoch in einen Bereich des Gaseintrittgehäuses mit hoher Abgasgeschwindigkeit eingedüst und so der Reinigungsmittelstrahl eingeschnürt wird, können der Düsenring und die Laufschaufeln des Turbinenrades nunmehr sowohl über ihren Umfang als auch über ihre Schaufelhöhe gleichmässig mit dem Reinigungsmittel bestrichen werden. Somit wird trotz Verwendung nur einer Düse eine verbesserte Reinigungswirkung gewährleistet.

Besonders vorteilhaft ist es, wenn die Düse genau eine auf dem Mittelpunkt der Kreisfläche angeordnete Einspritzöffnung besitzt und sich der Abstand a von der inneren Gehäusewand zur Parallelfläche nach der Formel

$$a = \frac{d_a + d_i}{2} \cdot p_1 \qquad \text{mit } 15\% \leq p_1 \leq 20\%$$

berechnet. Bei dieser Anordnung der Düse bzw. der Einspritzöffnung werden die Stromlinien optimal zur gleichmässigen Ausbreitung des Reinigungsmittels genutzt, weshalb die Reinigung des Düsenrings und der Laufschaufeln weiter verbessert werden kann.

Es ist besonders zweckmässig, wenn die Düse beidseitig der Tangentialebene und in gleichem Abstand dazu zumindest eine Einspritzöffnung besitzt. Jede Einspritzöffnung besitzt eine Einspritzfläche, wobei die Summe der Einspritzflächen beiderseits der Tangentialebene gleich gross ausgebildet ist. Zudem sind die Einspritzöffnungen einander radial überlappend oder zumindest aneinander anschliessend angeordnet. Dadurch kann die Verteilung des Reinigungsmittels sowohl über den Umfang als auch über die Schaufelhöhe des Düsenrings weiter verbessert werden. Zudem sind solche Düsen kostengünstiger und besitzen eine grössere Lebensdauer als Düsen mit nur einer Einspritzöffnung.

Femer ist es vorteilhaft, wenn die Reinigungsmittelzuleitung aus zwei Teilleitungen besteht, an der äusseren Gehäusewand ein Befestigungselement für die von aussen anschliessende erste Teilleitung angeordnet und die zweite Teilleitung im Inneren des Gaseintrittgehäuses ausgebildet ist.

Aufgrund dieser Ausbildung kann das entweder axial oder radial ausgebildete Gaseintrittgehäuse, einschliesslich der Düse und der zweiten Teilleitung, komplett montiert werden. Der Anschluss der ersten Teilleitung, d.h. die vollständige Montage der Reinigungsvorrichtung erfolgt dann zu einem späteren Zeitpunkt, ohne dazu nochmals in das Gaseintrittgehäuse eingreifen zu müssen.

Zudem weist die innere Gehäusewand einen hohlen Innenraum auf und ist mit der äusseren Gehäusewand über zumindest eine im Strömungskanal ausgebildete Rippe verbunden. Die zweite Teilleitung verläuft im Inneren der Rippe und reicht bis in den Innenraum der inneren Gehäusewand. Sie ist dazu in das axiale Gaseintrittgehäuse eingegossen. Die Düse ist am stromaufwärtigen Ende der inneren Gehäusewand befestigt und mit der zweiten Teilleitung verbunden. Mit dieser Anordnung der zweiten Teilleitung wird eine Beeinflussung der Abgasströmung durch die Reinigungsmittelzuleitung vermieden und deren Standzeit wesentlich erhöht. Die zweite Teilleitung benötigt wenig Bauraum, so dass das Gaseintrittgehäuse in axialer Richtung relativ kurz ausgebildet werden kann. Ausserdem ist bei der Herstellung eines solchen axialen Gaseintrittgehäuses kaum zusätzlicher Fertigungsaufwand für die Reinigungsvorrichtung erforderlich.

Alternativ dazu, d.h. bei einem radialen Gaseintrittgehäuse, geht die zweite Teilleitung an ihrem einen Ende in eine Düse über und reicht am anderen Ende von innen bis zur inneren Gehäusewand. Die innere Gehäusewand weist ein Befestigungselement für die zweite Teilleitung auf. Im Inneren der Rippe ist eine Ausnehmung eingebracht, an welche sowohl die erste als auch die zweite Teilleitung anschliessen. Nach erfolgter Demontage des Turboladers vom radialen Gaseintrittgehäuse lässt sich daher die zweite Teilleitung, einschliesslich der Düse, relativ leicht aus dem Innenraum der inneren Gehäusewand lösen. Sie kann somit separat ausgetauscht werden, was eine deutliche Kostensenkung zur Folge hat.

Schliesslich ist die zweite Teilleitung stromauf der Düse angeordnet. Damit wird eine zusätzliche Konstruktionsvariante angeboten, bei welcher die zweite Teilleitung und die Düse von aussen montierbar bzw. demontierbar sind. Erforderliche Wartungs- bzw. Reparaturarbeiten an der Reinigungsvorrichtung können daher wesentlich schneller vorgenommen werden, so dass die Ausfallzeit des Turboladers und damit auch die der Brennkraftmaschine gesenkt werden kann.

## Kurze Beschreibung der Zeichnung

In der Zeichnung sind mehrere Ausführungsbeispiele der Erfindung anhand eines radialen bzw. eines axialen Gaseintrittgehäuses einer Axialturbine dargestellt.

Es zeigen:

Fig. 1 einen Teillängsschnitt der mit einem radialen Gaseintrittgehäuse ausgestatteten Axialturbine, dargestellt in der Ebene der Staupunktstromlinie, d.h. in einer alle Punkte der Staupunktstromlinie aufnehmenden Ebene;

Fig. 2 einen vergrösserten Ausschnitt von Fig. 1, mit den zur Lokalisierung der Austrittsöffnung der Düse erforderlichen Angaben;

Fig. 3 eine Ansicht der gedachte Kreisfläche in Richtung des Pfeiles III in Fig. 2;

Fig. 4 eine vergrösserte Darstellung der in Fig. 1 gezeigten Düse, jedoch nur oberhalb der Düsenachse aufgeschnitten dargestellt;

Fig. 5 einen Querschnitt durch die Düse entlang der Linie V-V in Fig. 4;

Fig. 6 einen Teillängsschnitt der mit einem axialen Gaseintrittgehäuse ausgestatteten Axialturbine, dargestellt in der Ebene der Staupunktstromlinie;

Fig. 7 eine Ansicht des Gaseintrittgehäuses gemäss Fig. 6, in Pfeilrichtung VII dargestellt;

Fig. 8 eine vergrösserte Darstellung der Düse, gemäss Fig. 6;

Fig. 9 einen Querschnitt durch die Düse entlang der Linie IX-IX in Fig. 8;

Fig. 10 einen Querschnitt durch die Düse entlang der Linie X-X in Fig. 8;

Fig. 11 einen Teillängsschnitt durch ein Gaseintrittgehäuse gemäss Fig. 6, jedoch in einer weiteren Ausführungsform.

Es sind nur die für das Verständnis der Erfindung wesentlichen Elemente gezeigt. Nicht dargestellt sind von der Anlage beispielsweise die Brennkraftmaschine und die Verdichterseite sowie der Lagerbereich des Turboladers. Die Strömungsrichtung der Arbeitsmittel ist mit Pfeilen bezeichnet.

## Weg zur Ausführung der Erfindung

Hauptbestandteile eines nur teilweise dargestellten Turboladers sind dessen Verdichterseite und die mit einer Axialturbine 1 ausgestattete Turbinenseite. Der Turbolader ist sowohl verdichter- als auch turbinenseitig mit einer als Dieselmotor ausgebildeten Brennkraftmaschine verbunden.

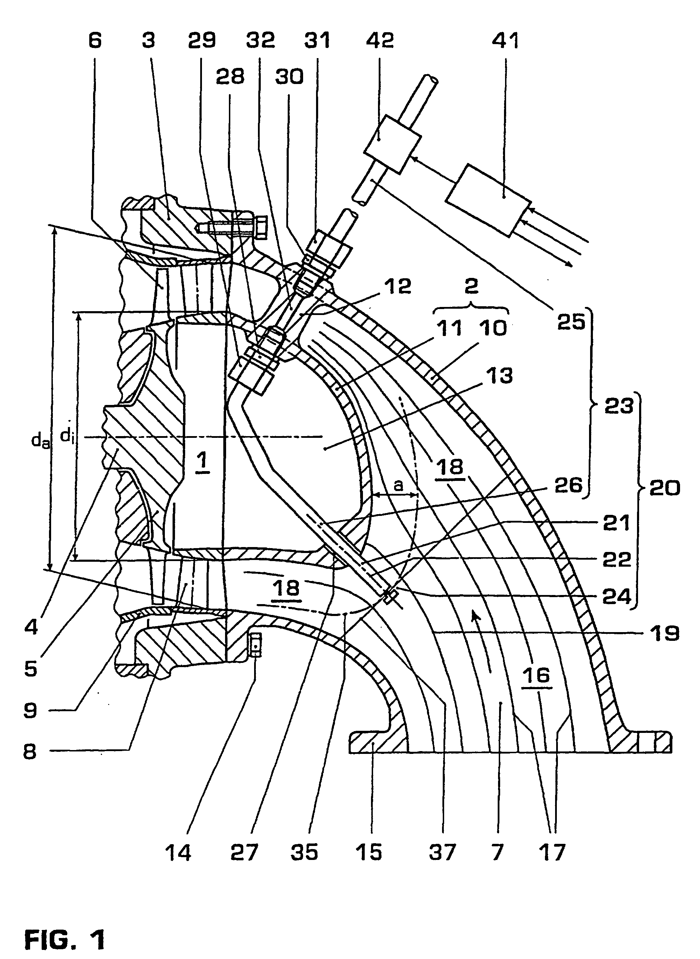

In einem ersten Ausführungsbeispiel ist die Axialturbine 1 mit einem radialen Gaseintrittgehäuse 2 ausgestattet. Sie besitzt zudem ein Gasaustrittgehäuse 3, ein von einer Turboladerwelle 4 getragenes Turbinenrad 5 mit Laufschaufeln 6 sowie einen im Gaseintrittgehäuse 2 ausgebildeten Strömungskanal 7 für die Abgase des Dieselmotors. Stromauf der Laufschaufeln 6 ist im Strömungskanal 7 ein Düsenring 8 mit einem Aussen- und einem Innendurchmesser $d_a$, $d_i$ angeordnet. Die Laufschaufeln 6 werden nach aussen von einem als Diffusor ausgebildeten Abdeckring 9 abgeschlossen. Das Gaseintrittgehäuse 2 weist eine äussere sowie eine innere Gehäusewand 10, 11 auf, welche den Strömungskanal 7 begrenzen und über drei strömungsgünstig ausgebildete Rippen 12, von denen nur eine dargestellt ist, miteinander verbunden sind. Die innere Gehäusewand 11 besitzt einen hohlen Innenraum 13 und dient der Abdeckung des Turbinenrades 5 sowie der Turboladerwelle 4 gegenüber dem Strömungskanal 7. Am Gaseintrittgehäuse 2 sind mehrere als Schrauben ausgebildete Verbindungselemente 14 zum Gasaustrittgehäuse 3 angeordnet (Fig. 1). An seinem stromaufwärtigen Ende weist das Gaseintrittgehäuse 2 einen zur Verbindung mit einem nicht dargestellten Abgasrohr des Dieselmotors dienenden Gaseintrittflansch 15 auf.

Während dem Betrieb des Turboladers werden die vom Dieselmotor kommenden heissen Abgase zunächst in einem im Querschnitt zumindest annähernd kreisförmigen Abgasstrom 16, entlang einer Anzahl von Stromlinien 17 in das radiale Gaseintrittgehäuse 2 der Axialturbine 1 eingeleitet. Durch die Wirkung der inneren Gehäusewand 11 erfolgt eine Umwandlung in einen ringförmigen Abgasstrom 18 mit einer einzigen, rechtwinklig auf die inneren Gehäusewand 11 auftreffenden Staupunktstromlinie 19. Der nunmehr ringförmige Abgasstrom 18 wird über den Strömungskanal 7 zum Turbinenrad 5 weitergeleitet. Dabei hat der stromauf angeordnete Düsenring 8 die Aufgabe, die Abgase optimal auf die Laufschaufeln 6 des Turbinenrades 5 zu leiten. Das somit angetriebene Turbinenrad 5 sorgt seinerseits für den Antrieb des mit ihm verbundenen, nicht dargestellten Verdichters. Die im Verdichter komprimierte Luft wird zur Aufladung, d.h. zur Leistungssteigerung des Dieselmotors eingesetzt.

Stromauf des Düsenrings 8 ist eine in den Strömungskanal 7 mündende Reinigungsvorrichtung 20 am Gaseintrittgehäuse 2 angeordnet. Diese besteht aus einer Düse 21 mit einer Mittelachse 22, einer Reinigungsmittelzuleitung 23 sowie einer Einspritzöffnung 24. Die Reinigungsmittelzuleitung 23 ist zweiteilig, mit einer ersten sowie einer zweiten Teilleitung 25, 26 ausgebildet. Letztere ist fast ausschliesslich im Innenraum 13 der inneren Gehäusewand 11 angeordnet. Das stromaufwärtige Ende der inneren Gehäusewand 11 ist mit einer Bohrung 27 versehen. Durch diese Bohrung 27 hindurch führt die zweite Teilleitung 26 bis in den Strömungskanal 7, wo sie in die Düse 21 übergeht.

An ihrem anderen Ende ist die zweiten Teilleitung 26 im Bereich einer der Rippen 12 an der inneren Gehäusewand 11 angeschlossen, wozu diese mit einem als Einschraubstutzen ausgebildeten Befestigungselement 28 versehen ist und die zweite Teilleitung 26 eine entsprechende Überwurfmutter 29 besitzt. Die erste Teilleitung 25 greift von aussen an der äusseren Gehäusewand 10 an, wozu diese ebenfalls ein als Einschraubstutzen ausgebildetes Befestigungselement 30 und die erste Teilleitung 25 eine entsprechende Überwurfmutter 31 aufweist. Innerhalb der betreffenden Rippe 12, d.h. zwischen der ersten und der zweiten Teilleitung 25, 26 ist eine mit diesen korrespondierende Ausnehmung 32 ausgebildet (Fig. 1). Natürlich können auch andere Befestigungselemente für die beiden Teilleitungen 25, 26 vorgesehen werden.

Die Einspritzöffnung 24 der Düse 21 ist auf einem Mittelpunkt 33 einer gedachten Kreisfläche 34 angeordnet. Die Kreisfläche 34 ist durch den in einem Abstand a stromauf der inneren Gehäusewand 11 angeordneten Mittelpunkt 33 sowie durch einen Durchmesser $d_K$ definiert. Der Mittelpunkt 33 der Kreisfläche 34 liegt auf einer gedachten Parallelfläche 35 zur inneren Gehäusewand 11, deren Abstand a von der inneren Gehäusewand 11 sich nach folgender Formel berechnet:

$$a = \frac{d_a + d_i}{2} \cdot p_1 \qquad \text{mit } 15\% \leq p_1 \leq 20\%.$$

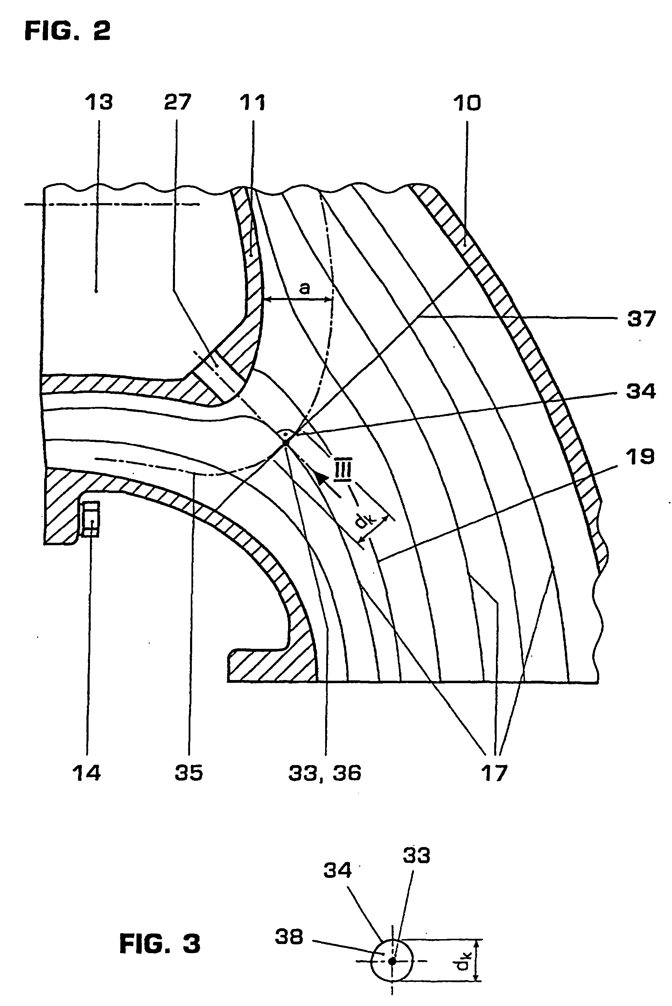

Die Berechnung des Ortes an dem die Einspritzöffnung 24 anzuordnen ist, erfolgt bereits vor der Montage der Düse 21 in das Gaseintrittgehäuse 2. In Figur 2 ist die entsprechende Vorgehensweise dargestellt. Nach der oben beschriebenen Ermittlung des Abstandes a, ergibt sich aus dem Prozentsatz $p_1$ ein minimaler und ein maximaler Abstand a der Parallelfläche 35 zur inneren Gehäusewand 11, wobei der mittlere Wert in der Figur 2 dargestellt ist. Nur eine der in einem ohne die Düse 21 ausgebildeten Gaseintrittgehäuse 2 vorhandenen Stromlinien 17 des Abgasstromes 16 schneidet die Parallelfläche 35 rechtwinklig und definiert damit einen Schnittpunkt 36, auf dem der Mittelpunkt 33 der Kreisfläche 34 angeordnet ist. Durch den Schnittpunkt 36 und tangential zur Parallelfläche 35 verläuft eine Tangentialebene 37, in welcher die Kreisfläche 34 ausgebildet ist. Der Durchmesser $d_K$ der Kreisfläche 34 berechnet sich nach folgender Formel:

$$d_K = \frac{d_a + d_i}{2} \cdot p_2 \qquad \text{mit } 0\% \leq p_2 \leq 6\%.$$

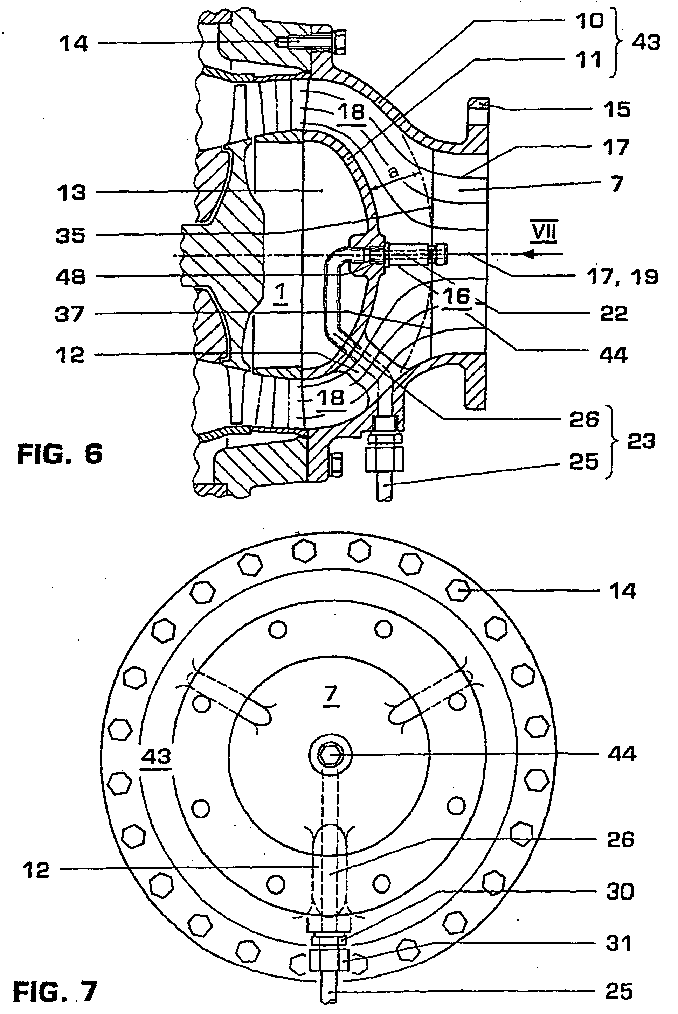

Die Mittelachse 22 der Düse 21 ist senkrecht zur Tangentialebene 37 angeordnet und ihre Einspritzöffnung 24 parallel zur Tangentialebene 37 ausgerichtet. Obwohl die Einspritzöffnung 24 der Düse 21 in diesem Ausführungsbeispiel auf dem Mittelpunkt 33 der Kreisfläche 34 liegt (Fig. 1, Fig. 2), kann sie natürlich auch auf einem anderen, beliebigen Punkt 38 der Kreisfläche 34 angeordnet werden (Fig. 3). Dabei müssen jedoch gewisse Abstriche bei der Reinigungswirkung hingenommen werden.

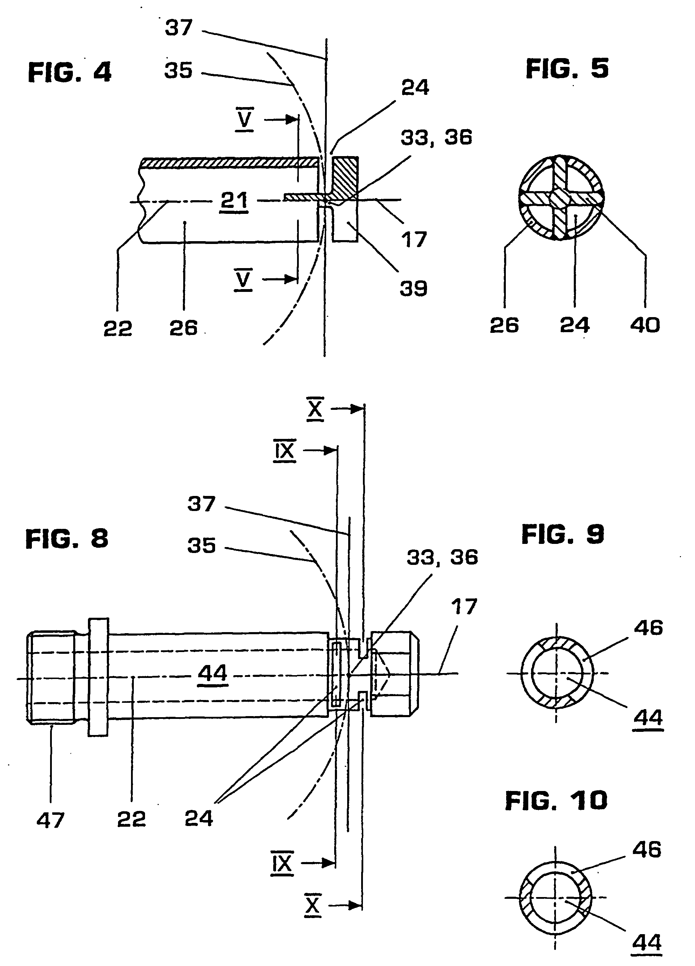

Zur Verdeutlichung der Anordnung der Einspritzöffnung 24 zeigt die Figur 4 eine vergrösserte Darstellung der Düse 21 mit dem Schnittpunkt 36 der Stromlinie 17 mit der Parallelfläche 35. Dabei verläuft die Tangentialebene 37 mittig durch die Einspritzöffnung 24 und schneidet die Mittelachse 22 der Düse 21 rechtwinklig. Die dazu verwendete Düse 21 besteht aus dem Ende der zweiten Teilleitung 26 und einer Prallplatte 39 mit vier kreuzförmig angeordneten Befestigungsrippen 40, welche mit der Teilleitung 26 verschweisst sind (Fig. 5). Natürlich können auch andere geeignete Düsen verwendet werden.

Damit sind die Düse 21 und ihrer Einspritzöffnung 24 in einem Bereich des Strömungskanals 7 angeordnet, in dem sowohl der Verlauf der Stromlinien 17 als auch das Strömungsgeschwindigkeitsprofil eine vollständige Ausbreitung und somit eine gleichmässige Verteilung des Reinigungsmittels auf dem Düsenring 8 sowie den Laufschaufeln 6 des Turbinenrades 5 ermöglicht. Daher können der Düsenring 8 und die Laufschaufeln 6 sowohl über ihren Umfang als auch über ihre Schaufelhöhe gleichmässig mit dem Reinigungsmittel bestrichen werden, so dass trotz Verwendung nur einer Düse 21 eine verbesserte Reinigungswirkung erreicht wird.

Als Reinigungsmittel für den Düsenring 8 können sowohl Flüssigkeiten, wie beispielsweise Wasser, oder auch feste Stoffe, wie z.B. die bekannten Reinigungsgranulate verwendet werden. Die oben beschriebene Düse 21 ist jedoch besonders gut für Granulate geeignet. Der Reinigungsvorgang wird von einer mit der Reinigungsvorrichtung 20 verbundenen Mess- und Steuereinheit 41 überwacht und mittels eines Ventils 42 ausgelöst (Fig. 1). Die Mess- und Steuereinheit 41 kann beispielsweise wie in der DE-A1 35 15 825 ausgebildet und angeordnet werden. Natürlich sind auch andere Lösungen möglich. So kann statt des Luftdruckes stromab des Turboladers auch eine andere Regelgrösse, wie z. B. die Abgastemperatur, der Ladedruck oder die Drehzahl des Turboladers, erfasst und ein dafür geeignetes Messglied angeordnet werden. Auch die aufgrund der Verschmutzung des Turbinenrades 5 entstehende Unwuchten sind als Turboladervibrationen messbar und können daher ebenfalls als Regelgrösse dienen.

In einem zweiten Ausführungsbeispiel besitzt der Turbolader eine Axialturbine 1 mit einem axialen Gaseintrittgehäuse 43 (Fig. 6, Fig. 7). Dabei ist die zweite Teilleitung 26 der Reinigungsmittelzuleitung 23 in das Gaseintrittgehäuse 43, d.h. genauer in die innere Gehäusewand 11, in eine der Rippen 12 und in die äussere Gehäusewand 10 eingegossen. Im Strömungskanal 7 ist eine Düse 44 mit vier Einspritzöffnungen 24 ausgebildet. Aufgrund der zentralen Lage der Staupunktstromlinie 19 existiert keine seitliche Verschiebung des Schnittpunktes 36, so dass dieser und damit auch die Achse 22 der Düse 44 auf der Staupunktstromlinie 19 liegen (Fig. 6). Analog dem ersten Ausführungsbeispiel kann natürlich ebenfalls eine Kreisfläche 34 ermittelt werden, wobei die Einspritzöffnungen 24 der Düse 44 auf einem beliebigen Punkt 38 dieser Kreisfläche 34 angeordnet werden können (Fig. 8, Fig. 3).

Beidseitig der Tangentialebene 37 durch den Schnittpunkt 36 und jeweils in gleichem Abstand zu dieser Tangentialebene 37 sind jeweils zwei Einspritzöffnungen 24 der Düse 44 angeordnet. Dabei sind die Einspritzöffnungen 24 einander radial überlappend angeordnet und parallel zur Tangentialebene 37 ausgerichtet (Fig. 8). Jede Einspritzöffnung 24 besitzt eine Einspritzfläche 46 (Fig. 9, Fig. 10), wobei die Summe der Einspritzflächen 46 beidseitig der Tangentialebene 37 gleich gross ausgebildet ist. Am den Einspritzöffnungen 24 entgegengesetzten Ende der Düse 44 ist ein Aussengewinde 47 angebracht (Fig. 8), welches mit einem entsprechenden Innengewinde 48 der inneren Gehäusewand 11 korrespondiert und der Befestigung der Düse 44 dient (Fig. 6).

Die Düse 44 ist insbesondere für die Verwendung von flüssigen Reinigungsmitteln, wie beispielsweise Wasser, geeignet. Sie ist gegenüber der im ersten Ausführungsbeispiel verwendeten Düse 21 sowohl kostengünstiger als auch robuster. Die Verteilung des Reinigungsmittels und damit die Reinigungswirkung beider Düsen 44, 21 ist gleich.

Im Unterschied zum ersten Ausführungsbeispiel ist die zweite Teilleitung 26 nicht nur in der inneren Gehäusewand 11 ausgebildet, sondern führt auch durch die Rippe 12 hindurch. Sie mündet in der äusseren Gehäusewand 10 und schliesst dort an die erste Teilleitung 25 an. Dazu muss zwar die entsprechende Rippe 12 etwas vergrössert werden, jedoch können der im ersten Ausführungsbeispiel an der inneren Gehäusewand 11 befestigte Einschraubstutzen 28 und die entsprechende Überwurfmutter 29 der zweiten Teilleitung 26 entfallen (Fig. 1, Fig. 6). Daher kann sich die zweite Teilleitung 26 im Innenraum 13 der inneren Gehäusewand 11 nicht lösen, weshalb die Gefahr einer Havarie der Axialturbine 1, durch Eindringen dieser Teilleitung 26 in das rotierende Turbinenrad 5, ausgeschlossen ist.

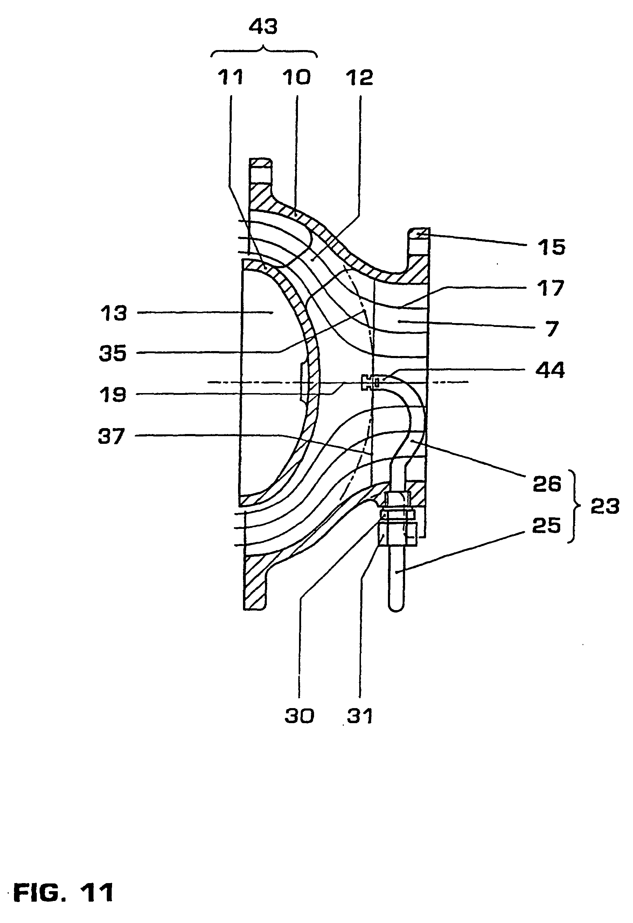

In einem dritten Ausführungsbeispiel, wiederum mit einem axialen Gaseintrittgehäuse 43, ist die zweite Teilleitung 26 stromauf der Düse 44 angeordnet (Fig. 11). Sie führt somit nicht durch den Innenraum 13 der inneren Gehäusewand 11, weshalb die Düse 44 wesentlich einfacher und zudem von aussen montiert bzw. demontiert werden kann. Selbstverständlich ist eine solche Anordnung auch bei einem radialen Gaseintrittgehäuse 2 möglich.

## Bezugszeichenliste

| 1 | Axialturbine |
| 2 | Gaseintrittgehäuse, radial |
| 3 | Gasaustrittgehäuse |
| 4 | Turboladerwelle |
| 5 | Turbinenrad |
| 6 | Laufschaufel |
| 7 | Strömungskanal |
| 8 | Düsenring |
| 9 | Abdeckring, Diffusor |
| 10 | Gehäusewand, äussere |
| 11 | Gehäusewand, innere |
| 12 | Rippe |
| 13 | Innenraum, von 11 |
| 14 | Verbindungselement, Schraube |
| 15 | Gaseintrittflansch |
| 16 | Abgasstrom, kreisförmig |
| 17 | Stromlinie |
| 18 | Abgasstrom, ringförmig |
| 19 | Staupunktstromlinie |
| 20 | Reinigungsvorrichtung |
| 21 | Düse |
| 22 | Mittelachse |
| 23 | Reinigungsmittelzuleitung |
| 24 | Einspritzöffnung |

| | |
|---|---|
| 25 | Teilleitung, erste |
| 26 | Teilleitung, zweite |
| 27 | Bohrung |
| 28 | Befestigungselement, Einschraubstutzen |
| 29 | Überwurfmutter, von 26 |
| 30 | Befestigungselement, Einschraubstutzen |
| 31 | Überwurfmutter, von 25 |
| 32 | Ausnehmung |
| 33 | Mittelpunkt |
| 34 | Kreisfläche |
| 35 | Parallelfläche |
| 36 | Schnittpunkt |
| 37 | Tangentialebene |
| 38 | Punkt, beliebiger |
| 39 | Prallplatte |
| 40 | Befestigungsrippe |
| 41 | Mess- und Steuereinheit |
| 42 | Ventil |
| 43 | Gaseintrittgehäuse, axial |
| 44 | Düse |
| 46 | Einspritzfläche |
| 47 | Aussengewinde |
| 48 | Innengewinde |
| a | Abstand, von 11 zu 33 |
| $d_a$ | Aussendurchmesser, von 8 |
| $d_i$ | Innendurchmesser, von 8 |
| $d_K$ | Durchmesser, von 34 |
| $p_1$ | Prozentsatz |
| $p_2$ | Prozentsatz |

**Patentansprüche**

1. Axialturbine eines Turboladers, mit einem Gaseintrittgehäuse (2, 43), einem von einer Turboladerwelle (4) getragenen Turbinenrad (5) mit Laufschaufeln (6), einem im Gaseintrittgehäuse (2, 43) ausgebildeten Strömungskanal (7) für die Abgase einer mit dem Turbolader verbundenen Brennkraftmaschine, einem stromauf der Laufschaufeln (6) im Strömungskanal (7) angeordneten Düsenring (8) mit einem Aussen- und einem Innendurchmesser ($d_a$, $d_i$) sowie einer weiter stromauf angeordneten, in den Strömungskanal (7) mündenden und mit einer Mess- und Steuereinheit (41) verbunden Reinigungsvorrichtung (20), wobei das Gaseintrittgehäuse (2, 43) eine äussere sowie eine innere Gehäusewand (10, 11) aufweist, einen mit einer Anzahl von Stromlinien (17) ausgestatteten Abgasstrom (16) der Brennkraftmaschine aufnimmt und diesen zu den Laufschaufeln (6) des Turbinenrades (5) weiterleitet, **dadurch gekennzeichnet, dass**

   a) die Reinigungsvorrichtung (20) aus nur einer Düse (21, 44) mit einer Mittelachse (22) und zumindest einer Einspritzöffnung (24) sowie aus einer Reinigungsmittelzuleitung (23) besteht,

   b) die zumindest eine Einspritzöffnung (24) auf einem beliebigen Punkt (38) einer gedachten Kreisfläche (34) angeordnet und die Kreisfläche (34) durch einen in einem Abstand (a) stromauf der inneren Gehäusewand (11) angeordneten Mittelpunkt (33) sowie durch einen Durchmesser ($d_K$) definiert ist,

   c) der Mittelpunkt (33) der Kreisfläche (34) auf einer gedachten Parallelfläche (35) zur inneren Gehäusewand (11) liegt, deren Abstand (a) von der inneren Gehäusewand (11) sich nach folgender Formel berechnet:

$$a = \frac{d_a + d_i}{2} \cdot p_1 \qquad \text{mit } 5\% \leq p_1 \leq 30\%,$$

   d) eine der in einem ohne Düse (21, 44) ausgebildeten Gaseintrittgehäuse (2, 43) darstellbaren Stromlinien (17) des Abgasstromes (16) die Parallelfläche (35) rechtwinklig schneidet und damit einen Schnittpunkt (36) definiert, auf dem der Mittelpunkt (33) der Kreisfläche (34) angeordnet ist,

   e) eine Tangentialebene (37) zur Parallelfläche (35) durch den Schnittpunkt (36) verläuft und die Kreisfläche (34) in der Tangentialebene (37) ausgebildet ist,

f) sich der Durchmesser ($d_K$) der Kreisfläche (34) nach folgender Formel berechnet:

$$d_K = \frac{d_a + d_i}{2} \cdot p_2 \qquad \text{mit } 0\% \leq p_2 \leq 6\%,$$

g) die Mittelachse (22) der Düse (21, 44) senkrecht zur Tangentialebene (37) angeordnet und die zumindest eine Einspritzöffnung (24) der Düse (21, 44) zumindest annähemd parallel zur Tangentialebene (37) ausgerichtet ist.

2. Axialturbine nach Anspruch 1, **dadurch gekennzeichnet, dass** sich der Abstand (a) von der inneren Gehäusewand (11) zur Parallelfläche (35) nach der Formel

$$a = \frac{d_a + d_i}{2} \cdot p_1 \qquad \text{mit } 15\% \leq p_1 \leq 20\%$$

berechnet und die Düse (21) eine auf dem Mittelpunkt (33) der Kreisfläche (34) angeordnete Einspritzöffnung (24) aufweist.

3. Axialturbine nach Anspruch 1, **dadurch gekennzeichnet, dass**

   a) die Düse (44) beidseitig der und in gleichem Abstand zur Tangentialebene (37) zumindest eine Einspritzöffnung (24) besitzt,

   b) die Einspritzöffnungen (24) einander radial überlappend oder zumindest aneinander anschliessend angeordnet sind,

   c) jede Einspritzöffnung (24) eine Einspritzfläche (46) besitzt und die Summe der Einspritzflächen (46) beiderseits der Tangentialebene (37) gleich gross ausgebildet ist.

4. Axialturbine nach einem der Ansprüche 1 bis 3, **dadurch gekennzeichnet, dass**

   a) die Reinigungsmittelzuleitung (23) aus zwei Teilleitungen (25, 26) besteht,

   b) an der äusseren Gehäusewand (10) ein Befestigungselement (30) für die von aussen anschliessende erste Teilleitung (25) angeordnet ist,

   c) die zweite Teilleitung (26) im Inneren des Gaseintrittgehäuses (2, 43) ausgebildet ist.

5. Axialturbine nach Anspruch 4, **dadurch gekennzeichnet, dass**

   a) die innere Gehäusewand (11) einen hohlen Innenraum (13) aufweist und mit der äusseren Gehäusewand (10) über zumindest eine im Strömungskanal (7) ausgebildete Rippe (12) verbunden ist,

   b) die zweite Teilleitung (26) im Inneren der zumindest einen Rippe (12) verläuft, bis in den Innenraum (13) der inneren Gehäusewand (11) reicht und an deren stromaufwärtigen Ende mit der Düse (21, 44) verbunden ist.

6. Axialturbine nach Anspruch 5, **dadurch gekennzeichnet, dass** die zweite Teilleitung (26) in das Gaseintrittgehäuse (43) eingegossen und die Düse (21, 44) an der inneren Gehäusewand (11) befestigt ist.

7. Axialturbine nach Anspruch 4, **dadurch gekennzeichnet, dass**

   a) die innere Gehäusewand (11) einen hohlen Innenraum (13) aufweist und mit der äusseren Gehäusewand (10) über zumindest eine im Strömungskanal (7) ausgebildete Rippe (12) verbunden ist,

   b) die zweite Teilleitung (26) an ihrem einen Ende in die Düse (21) übergeht und am anderen Ende von innen bis zur inneren Gehäusewand (11) reicht,

   c) die innere Gehäusewand (11) ein Befestigungselement (28) für die zweite Teilleitung (26) aufweist, und

   d) im Inneren der Rippe (12) eine Ausnehmung (32) ausgebildet ist, an welche sowohl die erste als auch die zweite Teilleitung (25, 26) anschliessen.

8. Axialturbine nach Anspruch 4, **dadurch gekennzeichnet, dass** die zweite Teilleitung (26) stromauf der Düse (21, 44) angeordnet ist.

**Claims**

1. Axial turbine of a turbocharger, having a gas-inlet casing (2, 43), a turbine wheel (5) which is carried by a turbocharger shaft (4) and has moving blades (6), a flow passage (7), formed in the gas-inlet casing (2, 43), for the exhaust gases of an internal combustion engine connected to the turbocharger, a nozzle ring (8) which is arranged upstream of the moving blades (6) in the flow passage (7) and has an outer and an inner diameter ($d_a$, $d_i$), and a cleaning device (20) which is arranged further upstream, leads into the flow passage (7) and is connected to a measuring and control unit (41), in which arrangement the gas-inlet casing (2, 43) has an outer and an inner casing wall (10, 11), receives an exhaust-gas flow (16) of the internal combustion engine, the exhaust-gas flow (16) being provided with a number of flow lines (17), and directs this exhaust-gas flow (16) further to the moving blades (6) of the turbine wheel (5), **characterized in that** ,

a) the cleaning device (20) comprises only one nozzle (21, 44) having a centre axis (22) and at least one injection opening (24) as well as a cleaning-agent feed line (23),
b) the at least one injection opening (24) is arranged at any point (38) of an imaginary circular area (34), and the circular area (34) is defined by a centre (33) arranged at a distance (a) upstream of the inner casing wall (11) as well as by a diameter $(d_k)$,
c) the centre (33) of the circular area (34) lies on an imaginary parallel area (35) relative to the inner casing wall (11), the distance (a) of which from the inner casing wall (11) is calculated according to the following formula:

$$a = \frac{d_a + d_i}{2} \cdot P_1 \text{ with } 5\% \le P_1 \le 30\%,$$

d) one of the flow lines (17) of the exhaust-gas flow (16), which flow lines (17) can be represented in a gas-inlet casing (2, 43) formed without a nozzle (21, 44), intersects the parallel area (35) at right angles and thus defines an intersection point (36), at which the centre (33) of the circular area (34) is arranged,
e) a tangential plane (37) relative to the parallel area (35) runs through the intersection point (36), and the circular area (34) is formed in the tangential plane (37),
f) the diameter $(d_k)$ of the circular area (34) is calculated according to the following formula:

$$d_k = \frac{d_a + d_i}{2} \cdot P_2 \text{ with } 0\% \le P_2 \le 6\%,$$

g) the centre axis (22) of the nozzle (21, 44) is arranged perpendicularly to the tangential plane (37), and the at least one injection opening (24) of the nozzle (21, 44) is oriented at least approximately parallel to the tangential plane (37).

2. Axial turbine according to Claim 1, **characterized in that** the distance (a) from the inner casing wall (11) to the parallel area (35) is calculated according to the following formula:

$$a = \frac{d_a + d_i}{2} \cdot P_1 \text{ with } 15\% \le P_1 \le 20\%$$

and the nozzle (21) has an injection opening (24) arranged at the centre (33) of the circular area (34).

3. Axial turbine according to Claim 1, **characterized in that**

a) the nozzle (44) has at least one injection opening (24) on both sides of and at the same distance from the tangential plane (37),
b) the injection openings (24) are arranged so as to overlap one another radially or at least adjoin one another,
c) each injection opening (24) has an injection area (46) and the sum of the injection areas (46) on both sides of the tangential plane (37) is the same size.

4. Axial turbine according to one of Claims 1 to 3, **characterized in that**

a) the cleaning-agent feed line (23) consists of two line sections (25, 26),
b) a fastening element (30) for the first line section (25) adjoining from outside is arranged on the outer casing wall (10),
c) the second line section (26) is formed in the interior of the gas-inlet casing (2, 43).

5. Axial turbine according to Claim 4, **characterized in that**

a) the inner casing wall (11) has a hollow interior space (13) and is connected to the outer casing wall (10) via at least one rib (12) formed in the flow passage (7),
b) the second line section (26) runs in the interior of the at least one rib (12), extends right into the interior space (13) .of the inner casing wall (11) and is connected at its upstream end to the nozzle (21, 44).

6. Axial turbine according to Claim 5, **characterized in that** the second line section (26) is integrally cast in the gas-inlet casing (43), and the nozzle (21, 44) is fastened to the inner casing wall (11).

7. Axial turbine according to Claim 4, **characterized in that**

a) the inner casing wall (11) has a hollow interior space (13) and is connected to the outer casing wall (10) via at least one rib (12) formed in the flow passage (7),

b) the second line section (26) merges at its one end into the nozzle (21) and extends at its other end from inside up to the inner casing wall (11),

c) the inner casing wall (11) has a fastening element (28) for the second line section (26), and

d) a recess (32), adjoining which are both the first and the second line section (25, 26), is formed in the interior of the rib (12).

**8.** Axial turbine according to Claim 4, **characterized in that** the second line section (26) is arranged upstream of the nozzle (21, 44).

## Revendications

**1.** Turbine axiale d'une turbosoufflante, comprenant un carter d'entrée de gaz (2, 43), une roue de turbine (5) portée par un arbre de turbosoufflante (4) avec des aubes mobiles (6), un canal d'écoulement (7) réalisé dans le carter d'entrée de gaz (2, 43) pour les gaz d'échappement d'un moteur à combustion interne connecté à la turbosoufflante, un anneau de tuyère (8) disposé en amont des aubes mobiles (6) dans le canal d'écoulement (7) avec un diamètre extérieur et un diamètre intérieur ($d_a$, $d_i$) ainsi qu'un dispositif de nettoyage (20) disposé plus en amont, débouchant dans le canal d'écoulement (7) et connecté à une unité de mesure et de commande (41), le carter d'entrée de gaz (2, 43) présentant une paroi extérieure et une paroi intérieure de carter (10, 11), recevant un courant de gaz d'échappement (16) du moteur à combustion interne pourvu d'une pluralité de lignes de courant (17) et conduisant celui-ci vers les aubes mobiles (6) de la roue de turbine (5), **caractérisée en ce que**

a) le dispositif de nettoyage (20) se compose de seulement une buse (21, 44) avec un axe médian (22) et au moins une ouverture d'injection (24) ainsi que d'une conduite d'amenée d'agent de nettoyage (23),

b) l'au moins une ouverture d'injection (24) est disposée sur un point quelconque (38) d'une surface circulaire imaginaire (34) et la surface circulaire (34) est définie par un centre (33) disposé à une distance (a) en amont de la paroi intérieure du carter (11) ainsi que par un diamètre ($d_K$),

c) le centre (33) de la surface circulaire (34) se trouve sur une surface parallèle imaginaire (35) par rapport à la paroi intérieure du carter (11), dont la distance (a) depuis la paroi intérieure du carter (11) se calcule selon la formule suivante :

$$a = \frac{d_a + d_i}{2} \cdot p_1 \text{ avec } 5\% \leq p_1 \leq 30\%,$$

d) l'une des lignes de courant (17) du courant de gaz d'échappement (16) pouvant être représentée dans un carter d'entrée de gaz (2, 43) réalisé sans buse (21, 44) coupe la surface parallèle (35) à angle droit et de ce fait définit un point d'intersection (36), sur lequel est disposé le centre (33) de la surface circulaire (34),

e) un plan tangentiel (37) à la surface parallèle (35) passe par le point d'intersection (36) et la surface circulaire (34) est réalisée dans le plan tangentiel (37),

f) le diamètre ($d_K$) de la surface circulaire (34) se calcule selon la formule suivante :

$$d_K = \frac{d_a + d_i}{2} \cdot p_2 \text{ avec } 0\% \leq p_2 \leq 6\%,$$

g) l'axe médian (22) de la buse (21, 44) est disposé perpendiculairement au plan tangentiel (37) et l'au moins une ouverture d'injection (24) de la buse (21, 44) est orientée au moins approximativement parallèlement au plan tangentiel (37).

**2.** Turbine axiale selon la revendication 1, **caractérisée en ce que** la distance (a) depuis la paroi intérieure du carter (11) jusqu'à la surface parallèle (35) se calcule selon la formule suivante :

$$a = \frac{d_a + d_i}{2} \cdot p_1 \text{ avec } 15\% \leq p_1 \leq 20\%$$

et la buse (21) présente une ouverture d'injection (24) disposée sur le centre (33) de la surface circulaire (34).

**3.** Turbine axiale selon la revendication 1, **caractérisée en ce que**

a) la buse (44) possède au moins une ouverture d'injection (24) de part et d'autre et à égale distance du plan tangentiel (37),

b) les ouvertures d'injection (24) sont disposées en se chevauchant radialement les unes les autres ou au moins en se raccordant les unes aux autres,

c) chaque ouverture d'injection (24) possède une surface d'injection (46) et la somme des surfaces d'injection (46) de part et d'autre du plan tangentiel (37) est égale.

4. Turbine axiale selon l'une quelconque des revendications 1 à 3, **caractérisée en ce que**

    a) la conduite d'amenée d'agent de nettoyage (23) se compose de deux conduites partielles (25, 26),

    b) un élément de fixation (30) pour la première conduite partielle (25) se raccordant depuis l'extérieur est disposé sur la paroi extérieure du carter (10),

    c) la deuxième conduite partielle (26) est réalisée à l'intérieur du carter d'entrée de gaz (2, 43).

5. Turbine axiale selon la revendication 4, **caractérisée en ce que**

    a) la paroi intérieure du carter (11) présente un espace interne creux (13) et est connectée à la paroi extérieure du carter (10) par le biais d'au moins une nervure (12) réalisée dans le canal d'écoulement (7),

    b) la deuxième conduite partielle (26) s'étend à l'intérieur de l'au moins une nervure (12), s'avance jusque dans l'espace interne (13) de la paroi intérieure du carter (11) et est connectée à son extrémité amont à la buse (21, 44).

6. Turbine axiale selon la revendication 5, **caractérisée en ce que** la deuxième conduite partielle (26) est coulée dans le carter d'entrée de gaz (43) et la buse (21, 44) est fixée sur la paroi intérieure du carter (11).

7. Turbine axiale selon la revendication 4, **caractérisée en ce que**

    a) la paroi intérieure du carter (11) présente un espace interne creux (13) et est connectée à la paroi extérieure du carter (10) par le biais d'au moins une nervure (12) réalisée dans le canal d'écoulement (7),

    b) la deuxième conduite partielle (26) se prolonge à l'une de ses extrémités par la buse (21) et s'étend à l'autre extrémité depuis l'intérieur jusque dans la paroi intérieure du carter (11),

    c) la paroi intérieure du carter (11) présente un élément de fixation (28) pour la deuxième conduite partielle (26), et

    d) un évidement (32) est réalisé à l'intérieur de la nervure (12), sur lequel la première et la deuxième conduite partielle (25, 26) se raccordent.

8. Turbine axiale selon la revendication 4, **caractérisée en ce que** la deuxième conduite partielle (26) est disposée en amont de la buse (21, 44).

**FIG. 1**

# FIG. 2

# FIG. 3

14    10 } 43

11 }

18

15

17

a

7

13

35

VII

48    17, 19

1

16

37    22

12    44

18

26 } 23

**FIG. 6**

25

14

7

43    44

26

12

30

31

**FIG. 7**

25

**FIG. 4**

**FIG. 5**

**FIG. 8**

**FIG. 9**

**FIG. 10**

**FIG. 11**